# DEMANDE DE BREVET EUROPEEN

(11) **EP 1 757 867 A1**
(43) Date de publication de la demande: **28.02.2007**
(21) Numéro de dépôt: 06023974.6
(22) Date de dépôt: 04.01.2006
(51) Int. Cl.: F24D 3/16

(54) **Elément échangeur de température réalisé par extrusion et équipé d'un diffuseur d'ondes infrarouges**

(30) Priorité: 29.07.2005 FR 0508163
(62) Demande divisionnaire de: 06290008.9
(71) Demandeur: Calorigen USA Corp, Miami FL 33137-4537 (US)
(72) Inventeur: Boussier, Jean-Jacques, 4830331 Povoa de Lanhoso (PT)
(74) Mandataire: Célanie, Christian

(57) **Abrégé**

L'invention concerne un module de radiation comportant un support (26), au moins un élément calorifère et/ou un élément caloporteur et un élément échangeur de température réalisé par extrusion et constitué d'une base (1) monobloc présentant une face interne (37b) comportant au moins un moyen (5,6) d'intégration de l'élément calorifère et/ou de l'élément caloporteur et une face externe (37a) comportant des ailettes de radiation. Le module comporte un diffuseur (25) recevant un rayonnement infrarouge issu de l'élément échangeur de température. Le diffuseur permet d'émettre un rayonnement infrarouge de longueur d'onde inférieure à la longueur d'onde du rayonnement reçu.

## Description

Le secteur technique de la présente invention est celui des dispositifs d'échange thermique, et plus particulièrement des dispositifs de chauffage par rayonnement infrarouge.

Le chauffage et le maintien à température d'une pièce ou d'un bâtiment est une préoccupation importante pour les architectes et thermiciens qui doivent prévoir et disposer une ou plusieurs sources de chaleur en fonction de la géométrie de la pièce à chauffer. On connaît de nombreux moyens de chauffage d'une pièce : chauffage par le sol, chauffage par air pulsé, chauffage par convecteurs, par rayonnement ou encore chauffage combinant la convection et le rayonnement. Les convecteurs et les dispositifs de climatisation par air pulsé sont actuellement les moyens de chauffage les plus communs. Ils comportent classiquement un support sur lequel sont fixés un élément échangeur de température et un élément calorifère. L'élément échangeur de température comporte généralement des ailettes de refroidissement disposées verticalement dans le cadre d'une convection naturelle ou parallèlement à la circulation d'air dans le cadre d'une convection forcée.

Les systèmes de climatisation présentent plusieurs inconvénients. Un premier inconvénient réside dans le coût de fabrication et d'installation. Un autre inconvénient réside dans le fait qu'une circulation d'air engendre souvent des problèmes médicaux pour les utilisateurs (développement de germes dans le système, "coup de froid", ...). Un autre inconvénient réside dans le faible rendement de ces systèmes consommant beaucoup d'énergie. Un autre inconvénient encore réside dans le fait que ces systèmes sont bruyants du fait de la circulation d'air.

Le but de la présente invention est de fournir un dispositif de régulation de la température d'une pièce ayant une grande surface d'échange et dissipant l'énergie sous forme de rayonnement infrarouge en onde moyenne et en basse température, afin d'apporter une solution technique aux inconvénients mentionnés ci-dessus.

On entend par basse température, une température inférieure à 70 °C.

Un tel dispositif comporte plusieurs éléments de formes spécifiques. C'est particulièrement le cas des ailettes de diffusion et des diffuseurs qui, pour pouvoir présenter une large surface de rayonnement, sont de forme particulièrement complexe. Cependant, les nouvelles techniques d'extrusion d'un matériau, et principalement de l'aluminium, permettent maintenant de réaliser des radiateurs de forme complexe, tout en ayant un coût inférieur au moulage. De plus, l'extrusion permet d'adapter certaines dimensions du radiateur en fonction des caractéristiques de la pièce à chauffer.

L'invention a donc pour objet un module de radiation comportant un support, au moins un élément calorifère et/ou un élément caloporteur et un élément échangeur de température réalisé par extrusion et constitué d'une base monobloc présentant une face interne comportant au moins un moyen d'intégration de l'élément calorifère et/ou de l'élément caloporteur et une face externe comportant des ailettes de radiation, module caractérisé en ce qu'il comporte un diffuseur recevant un rayonnement infrarouge issu de l'élément échangeur de température, ledit diffuseur permettant d'émettre un rayonnement infrarouge de longueur d'onde inférieure à la longueur d'onde du rayonnement reçu.

Selon une caractéristique de l'invention, le support se présente sous la forme d'un réceptacle et le diffuseur constitue un couvercle de ce réceptacle, de manière à réaliser une enceinte fermée délimitée par l'élément échangeur de température et l'élément calorifère et/ou l'élément caloporteur.

Selon une autre caractéristique de l'invention, le diffuseur présente une face interne de réception orientée vers les ailettes de diffusion et une face externe d'émission dont la surface est supérieure à la surface de la face de réception.

Selon encore une autre caractéristique de l'invention, la face interne de réception du diffuseur est sensiblement lisse et la face externe d'émission comporte des ondulations ou des excroissances afin de présenter une surface d'émission supérieure à la surface de la face de réception.

Selon une autre caractéristique de l'invention, les ailettes sont sensiblement perpendiculaires à la base et sensiblement parallèles entre elles.

Selon une autre caractéristique de l'invention, les ailettes présentent au niveau d'un bord un profil complémentaire à celui des moyens de réception et sont solidarisées à la base par insertion des profils complémentaires dans les moyens de réception des ailettes.

Selon un mode de réalisation de l'invention, les ailettes ont un profil sensiblement en arc de cercle.

Selon une autre caractéristique de l'invention, les ailettes sont disposées concaves sur une partie de la base et disposées convexes sur l'autre partie de la base.

Selon une autre caractéristique de l'invention, le module comporte un élément central constitué de deux ailettes de courbure opposées solidaires l'une de l'autre.

Selon un autre mode de réalisation de l'invention, les ailettes présentent un profil ondulé afin d'augmenter la surface d'échange de chaleur.

Selon une autre caractéristique de l'invention, chaque base comporte à ses deux extrémités latérales des moyens d'accrochage permettant la disposition côte à côte et la solidarisation entre elles de plusieurs bases.

Selon une autre caractéristique de l'invention, les moyens d'intégration d'un élément calorifère se présentent sous la forme de rails entre lesquels peut être inséré un élément calorifère.

Selon une autre caractéristique de l'invention, le module comporte un élément calorifère électrique se présentant sous la forme d'un tissu chauffant, une brique chauffante ou une résistance autorégulante.

Selon une autre caractéristique de l'invention, l'élément calorifère est un matériau composite souple, sensiblement plat et apte à épouser la face interne de la base.

Selon une autre caractéristique de l'invention, l'élément calorifère est collé sur la face interne de la base et est alimenté par une source électrique.

Selon une autre caractéristique de l'invention, le moyen caloporteur est un élément réfrigérant se présentant sous la forme d'au moins un tube dans lequel circule un fluide caloporteur.

Selon une autre caractéristique de l'invention, le module est réalisé en aluminium extrudé.

Selon une autre caractéristique de l'invention, le diffuseur émet un rayonnement infrarouge dont la longueur d'onde est comprise entre 7 et 15 µm et plus particulièrement entre 7,4 et 10 µm.

L'invention concerne également un dispositif de régulation de la température d'une pièce ou d'un véhicule, caractérisé en ce qu'il comporte un capteur de température, et au moins un module de radiation, et se présente sous une forme allongée et de faible largeur, afin d'être utilisé comme plinthe, comme profilé d'échange de température pour plafond, comme montant d'ouvrant ou comme colonne de radiation à 360°.

Un tout premier avantage du module de radiation selon l'invention réside dans sa modularité.

Un autre avantage réside dans le faible coût d'obtention.

Un autre avantage réside dans la possibilité de réaliser pour un faible coût un dispositif de dimension, de forme et d'aspect spécifiques.

Un autre avantage réside dans le fait qu'aucune des parties apparentes du module de radiation ne présente de température élevée, ce qui évite tout risque de brûlure des personnes ou des objets en contact avec le dispositif.

Un autre avantage réside dans la simplicité et la rapidité de montage du dispositif.

Un autre avantage réside dans le rendement performant de l'élément échangeur de température et des dispositifs le mettant en oeuvre.

Un autre avantage réside dans le fait qu'on peut modifier la surface de rayonnement du module de radiation en remplaçant une ou plusieurs ailettes ou le diffuseur par des ailettes (respectivement, par un diffuseur) de formes différentes.

Un autre avantage réside dans le fait que l'élément échangeur de température offre une très grand surface d'échange.

Un autre avantage d'un mode spécifique de réalisation de l'invention réside dans le fait que l'élément échangeur de température réalisé en aluminium extrudé présente une très bonne conductibilité thermique.

Un autre avantage réside dans le fait que l'invention permet d'éliminer la diffusion de chaleur par stratification d'air chaud au plafond, ce qui participe à réduire la consommation d'énergie.

D'autres caractéristiques, détails et avantages de l'invention ressortiront plus clairement de la description donnée ci-après à titre indicatif en relation avec des dessins dans lesquels :
- la figure 1 représente en vue éclatée un exemple de réalisation d'un module de radiation, selon l'invention,
- la figure 2 illustre un exemple d'utilisation d'un module de radiation de la température selon l'invention,
- la figure 3 illustre une variante de réalisation d'un élément échangeur de température
- la figure 4 illustre un exemple de réalisation d'un dispositif de régulation de la température, et
- la figure 5 illustre une autre variante de réalisation d'un élément échangeur de température.

Le principe de fonctionnement mis en oeuvre dans l'élément échangeur de température selon l'invention est celui de l'utilisation d'un ΔT (différence de températures) réduit entre la source de production et la source d'utilisation de température, ce qui induit une augmentation significative de rendement, et par voie de conséquence une diminution importante de la consommation d'énergie. L'élément échangeur de température peut aussi bien être utilisé en mode radiateur pour chauffer une pièce qu'en mode évaporateur pour diminuer la température d'une pièce. Par ΔT réduit entre la source de production et la source d'utilisation de température, on entend une différence de température inférieure à 95°C (par opposition aux convecteurs à combustion ou à résistances traditionnelles où le ΔT est de plusieurs centaines de degrés, au delà de 200 °C).

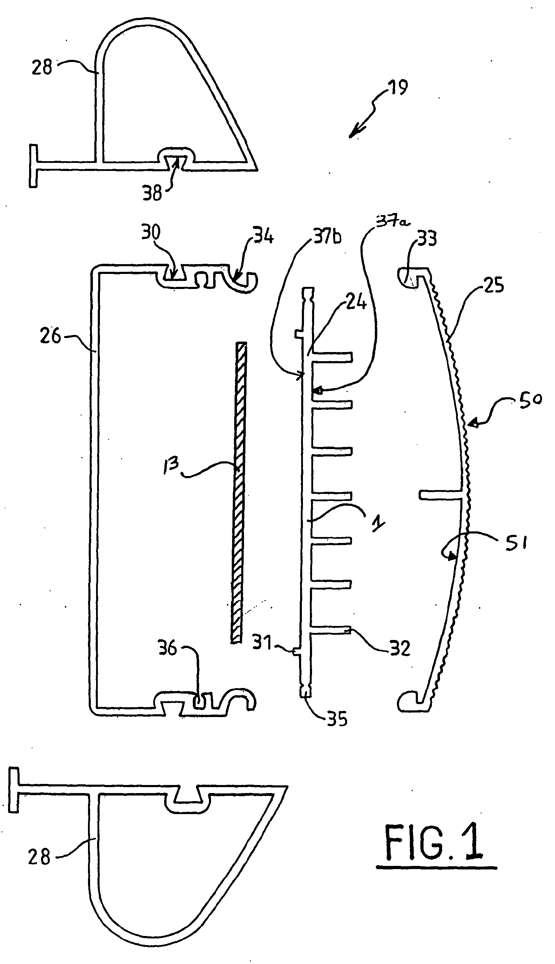

La figure 1 illustre en vue éclatée un exemple de réalisation d'un module de radiation simple selon l'invention. Dans cet exemple de réalisation, ce module de radiation 19 comporte un support 26, un diffuseur 25, un élément échangeur 24 de température monobloc disposé entre le support 26 et un diffuseur 25 et un élément calorifère 13.

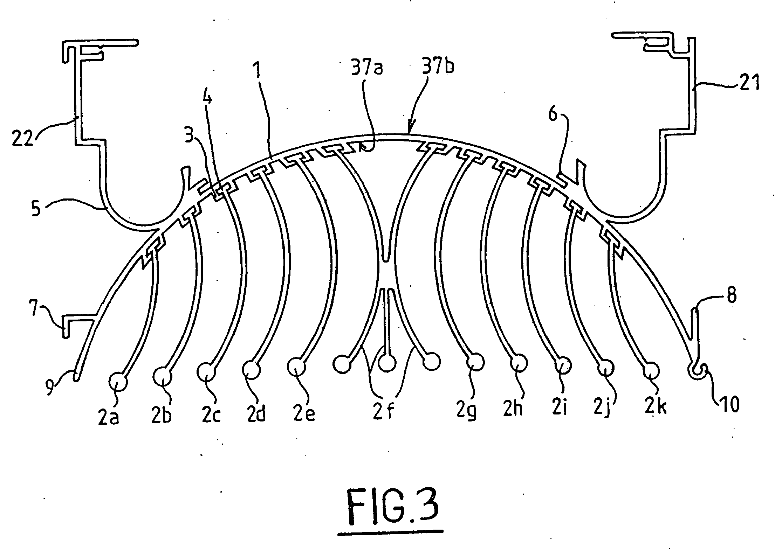

L'élément échangeur de température 24 se présente sous la forme d'une base 1 sensiblement plane, comportant une face externe 37a munie d'ailettes 32 sensiblement perpendiculaires à la base 1 et sensiblement parallèles entre elles et une face interne 37b opposée à la face interne et munie de rails 31 entre lesquels peut être disposé l'élément calorifère 13. L'élément échangeur de température 24 est représenté formant une pièce unique et comportant des ailettes 32 droites, mais on pourra très bien mettre en oeuvre un élément échangeur de température tel que décrit par la suite en relation avec la figure 3 sans changer la portée de l'invention. De même, on pourra équiper le module de radiation d'un élément caloporteur tel que décrit par la suite.

Le diffuseur 25 présente une face interne de réception 51, sensiblement lisse et orientée vers les ailettes de diffusion, et une face externe de diffusion 50 comportant des ondulations afin de présenter une surface d'émission supérieure à la surface de réception. La différence de surface entre les faces interne 51 et externe 50 du diffuseur 25 permet avantageusement au diffuseur de recevoir un rayonnement infrarouge issu de l'élément échangeur de température et d'émettre un rayonnement infrarouge de longueur d'onde inférieure à la longueur d'onde du rayonnement reçu.

Dans cet exemple de réalisation, la face interne 51 du diffuseur 25 est lisse et la face externe 50 présente des ondulations réalisées par une succession de courbes concaves et convexes. Une telle réalisation permet avantageusement d'obtenir un diffuseur dont la face externe d'émission présente une surface supérieure à celle de la face interne de réception. On pourra également remplacer les ondulations de la face externe par un autre motif, par exemple triangulaire, ou par des excroissance. On notera cependant qu'une face externe convexe avec des ondulations concaves/convexes présente l'avantage de diffuser uniformément les infrarouges. La différence de surfaces des faces externe 50 et interne 51 du diffuseur 25 permet avantageusement d'abaisser la charge thermique appliquée au diffuseur, ce qui modifie la longueur d'onde entre le rayonnement infra rouge reçu et émis par le diffuseur. D'une manière générale, on parvient à émettre un rayonnement infra rouge compris entre 7µm et 15µm.

Des carénages 28 sont prévus pour être fixés de part et d'autre du module de radiation 19. Le support 26 comporte des rainures 36 de profil complémentaire aux extrémités 35 de l'élément échangeur de température 24 afin que ce dernier puisse être rendu solidaire du support 26 par coulissement de ses extrémités 35 dans les rainures 36. Le diffuseur 25 comporte à ses extrémités des ergots 33. Le support 26 comporte également des gouttières 34, de profils complémentaires à ceux des ergots 33 du diffuseur 25 afin que ce dernier puisse être rendu solidaire du support par coulissement de ses ergots 33 dans les gouttières 34. Enfin, le support 26 et les carénages 28 comportent respectivement des profils 30 et 38 en queue d'aronde afin d'être solidarisés entre eux. On remarquera sur cette figure que le support 26 forme un réceptacle dont le diffuseur 25 constitue le couvercle, de manière à réaliser une enceinte fermée renfermant l'élément échangeur de température 24 et l'élément calorifère et/ou l'élément caloporteur. Une telle réalisation permet avantageusement d'empêcher toute circulation d'air dans le module 19, qui serait préjudiciable au fonctionnement du dispositif selon l'invention. En effet une circulation d'air refroidirait l'élément échangeur de température 24 et le diffuseur et diminuerait la capacité de radiation du module.

Le module ainsi réalisé peut être fabriqué selon différentes dimensions. Dans un mode spécifique de réalisation, le module de radiation se présente sous une forme allongée et de faible largeur, afin d'être utilisé comme plinthe, comme montant d'ouvrant ou comme profil de plafond. On entend par "faible largeur" une distance entre le diffuseur 25 et le fond du support 26 de l'ordre de quelques centimètres, par exemple 16 cm. Dans un autre mode de réalisation, le module de radiation aura une largeur allant de quelques centimètres à plusieurs décimètres et aura une longueur comprise entre 10 centimètres et plusieurs mètres.

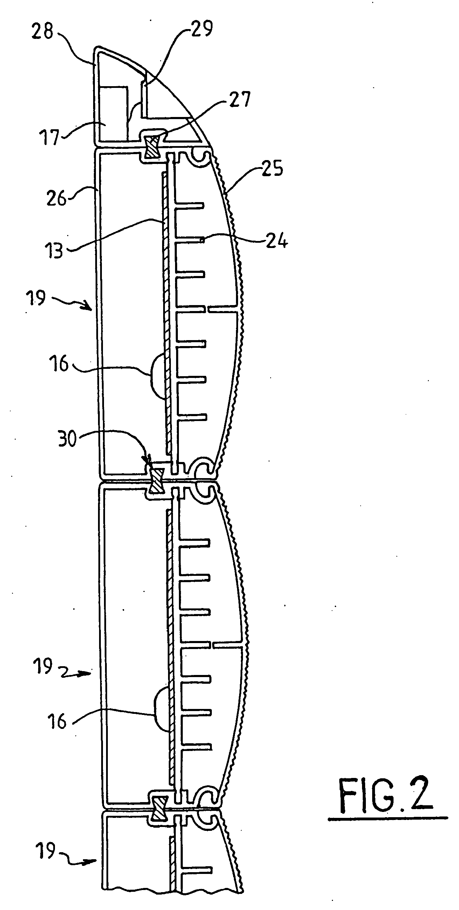

La figure 2 illustre un exemple de réalisation d'un dispositif de régulation de la température, pouvant se présenter sous la forme d'un sèche serviettes ou d'un radiateur incorporant plusieurs modules de radiation selon l'invention. Le dispositif est réalisé au moyen de plusieurs modules de radiation 19 solidaires les uns des autres (dont seuls deux modules sont représentés) et d'un carénage 28. Dans cet exemple de réalisation, les modules 19 de radiation et le carénage 28 sont solidarisés au moyen de profilés 27 en double queue d'aronde coopérant avec des profils complémentaires du support 26 des modules 19 et du carénage 28. Le carénage 28 est de forme adéquate pour prolonger le diffuseur 25 de manière esthétique.

Chaque module 19 de radiation comporte un élément calorifère 13 électrique se présentant sous la forme d'un matériau composite souple, sensiblement plat et épousant la face interne 37b de l'élément échangeur de température 24, et un capteur de température 16. Un calculateur 17 est relié électriquement aux différents capteurs de température 16, aux alimentations électriques des éléments calorifères 13 et à une interface utilisateur 29. L'interface utilisateur permet à l'utilisateur de déterminer les paramètres de fonctionnement du radiateur et de visualiser des données de fonctionnement telles que la température à éprouver ou la puissance de diffusion. Le calculateur remplit la fonction de moyen de régulation de la température en régulant la puissance électrique diffusée par l'élément calorifère en fonction du ΔT mesuré entre la consigne enregistrée et la température mesurée. Dans cet exemple de réalisation, le calculateur 17 et l'interface utilisateur 29 sont avantageusement disposés dans le carénage 28. On pourra évidemment réaliser l'invention en disposant ces éléments en dehors du radiateur, par exemple sur un mur ou sur un tableau de commande domotique.

Le fonctionnement du dispositif de régulation de la température selon l'invention est le suivant : suite à une commande de l'utilisateur ou à la détection d'une température inférieure au seuil de déclenchement, l'élément calorifère 13 est mis sous tension. La chaleur produite par l'élément calorifère 13 se propage par conduction dans l'échangeur 24. Les ailettes 32 (et dans une moindre mesure, la face externe 37a) transforment la chaleur reçue par l'élément échangeur en rayonnement infrarouge. Le rayonnement infrarouge est absorbé par la face interne 51 du diffuseur 25 et transformé en chaleur diffusée par conduction jusqu'à la face externe 50 du diffuseur. La face externe 50 transforme la chaleur du diffuseur en rayonnement infrarouge dont la longueur d'onde est inférieure à celle du rayonnement reçu par la face interne 51. Le rayonnement émis dans la pièce à chauffer présente une longueur d'onde trop longue pour chauffer les molécules de l'air, il parvient essentiellement à réchauffer les objets et individus présents dans la pièce, par rayonnement infrarouge.

Afin d'améliorer le rendement du module de radiation, on pourra colorer en noir la face interne 51 du diffuseur ainsi que la face externe 37a et les ailettes 32 de l'élément échangeur de température. Une telle coloration pourra être obtenue par traitement chimique (par exemple une oxydation), ou par l'ajout d'un revêtement coloré. En effet, une coloration noire et mate permet d'augmenter le taux d'émissivité et de captation des surfaces (principe des corps noirs).

La figure 3 représente une variante de réalisation d'un élément échangeur de température 20 selon l'invention.

Dans cette variante de réalisation, l'élément échangeur de température 20 comporte une base 1 monobloc extrudée sur laquelle sont fixées des ailettes 2a à 2k d'échange de chaleur réalisées par extrusion.

La base 1 monobloc présente une face externe 37a munie de glissières 3 constituant des moyens de réception des ailettes de radiation et une face interne 37b munie d'un moyen 6 d'intégration d'un élément calorifère et d'un moyen 5 d'intégration d'un élément caloporteur ou calorifère. Les glissières 3 et les moyens d'intégration 5, 6 sont intégrés à la base 1 et sont réalisés lors de l'extrusion de celle-ci. Le moyen 5 d'intégration de l'élément caloporteur ou calorifère présente un profil sensiblement semi-circulaire apte à recevoir un élément de chauffe sensiblement tubulaire (par exemple des tuyaux où circule un fluide caloporteur ou des cartouches PTC). Le moyen 5 d'intégration de l'élément calorifère est ici réalisé par des languettes 6 aptes à maintenir un élément de chauffe souple et sensiblement plat (par exemple un tissu chauffant) collé sur la face 37b.

Chaque ailette 2a à 2k est indépendante des autres ailettes et présente au niveau d'un bord un profil 4 complémentaire à celui des glissières 3 afin d'être rendue solidaire de la base 1 par coulissement de son bord 4 dans une glissière 3 de la base 1. Les ailettes 2a à 2k ont un profil sensiblement en arc de cercle. Dans cet exemple de réalisation, on a représenté des ailettes 2a à 2e disposées concaves sur une partie de la base 1 et des ailettes 2g à 2k disposées convexes sur l'autre partie de la base 1. Un élément central 2f est constitué de deux ailettes 2f de courbure opposée et solidaires l'une de l'autre au niveau d'une partie de leur surface de contact.

La base 1 est munie d'un côté (à gauche sur la figure) d'une excroissance 9 et d'un crochet 7 et de l'autre côté (à droite sur la figure) d'un crochet 10 et d'une languette 8. Ces éléments permettant l'accrochage de plusieurs éléments échangeurs de température entre eux, ou bien la fixation à un support non représenté ici. La base 1 est encore munie de deux pattes 21 et 22 permettant également sa fixation dans le support.

L'échangeur tel que décrit permet l'utilisation d'un ΔT faible entre la source de production et la source d'utilisation de température, ce qui n'est pas le cas des réalisations connues.

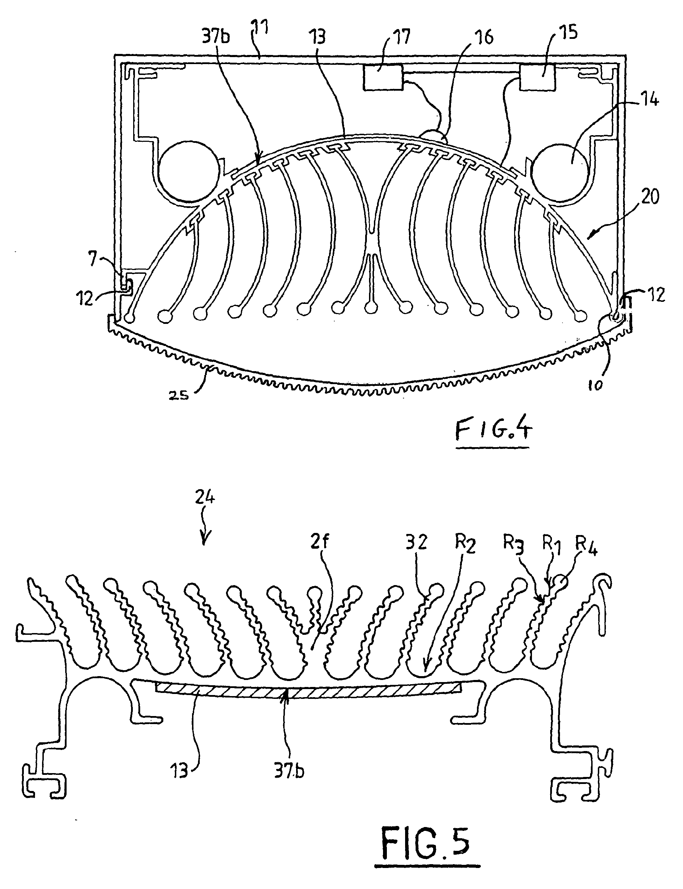

La figure 4 illustre un exemple de réalisation d'un dispositif de régulation de la température 18 selon l'invention. Le dispositif de régulation de la température 18 comporte un élément échangeur de température 20 tel que décrit précédemment en relation avec la figure 3, un élément calorifère 13 électrique, un élément caloporteur 14, un capteur de température 16, un calculateur 17, un support 11 supportant l'élément échangeur de température et un diffuseur 25.

Le support 11 comporte des moyens d'accrochage 12 coopérant avec les moyens d'accrochage 7 et 10 de l'élément échangeur de température 20. Les pattes 21 et 22 de la base viennent en appui sur le fond de la paroi latérale du support 11.

L'élément calorifère 13 se présente sous la forme d'un matériau composite souple, sensiblement plat et épousant la face interne 37b de la base 1 de l'élément échangeur de température 20 sur laquelle il peut être collé. L'élément calorifère 13 est par exemple un tissu chauffant alimenté par une source électrique 15 et collé sur la face interne 37b de la base 1. Le capteur de température 16 est directement fixé sur l'élément chauffant 13, ou sur la base 1 afin de contrôler en permanence la température diffusée. Le capteur de température 16 et la source électrique 15 sont reliés au calculateur 17 qui régule l'énergie fournie au tissu chauffant en fonction de l'écart entre la température mesurée et la température souhaitée.

Le moyen caloporteur 14 est un élément réfrigérant se présentant sous la forme de deux tubes 14 dans lesquels circule un fluide réfrigérant.

Une telle réalisation permet avantageusement d'obtenir un dispositif de régulation de la température pouvant aussi bien réaliser une fonction de radiateur en mettant en oeuvre l'élément chauffant 13, que de climatiseur en mettant en oeuvre l'élément réfrigérant 14. Il va de soi qu'un tel dispositif fonctionne soit en mode radiateur soit en mode climatiseur, de manières distinctes.

Avantageusement, l'utilisation de matériau composite souple chauffant à faible niveau de puissance, collé en partie arrière de l'élément échangeur de température permet, grâce à la grande surface d'échange des ailettes de limiter la température de la source de production de chaleur à un niveau très réduit. Ainsi, l'invention permet le chauffage d'une pièce par dissipation d'énergie rayonnante à un ΔT d'environ 8°C entre le diffuseur et la source d'utilisation de température. La réduction du ΔT augmente le rendement et réduit la consommation d'énergie du radiateur.

La figure 5 illustre une autre variante de réalisation d'un élément échangeur de température comportant un élément central 2f constitué de deux ailettes de courbures opposées et solidaires l'une de l'autre au niveau d'une partie de leur surface de contact. Les ailettes, ainsi que l'élément central, présentent un profil ondulé afin d'augmenter la surface d'échange de chaleur. Un élément calorifère électrique 13 se présentant sous la forme d'un matériau composite souple est collé sur la face interne 37b de l'élément échangeur de température.

Dans cet exemple de réalisation, les ailettes 32 présentent des ondulations sur chacune de leurs faces. L'ondulation des ailettes 32 est réalisée par une succession de courbes concaves de rayon R3 et convexe de rayon R1. L'extrémité des ailettes présente un profil circulaire de rayon R4. L'élément échangeur présente également un profil semi-circulaire de rayon R2 entre chaque ailette.

L'ondulation des ailettes apporte une augmentation de surface d'échange supérieure de plus de 40% par rapport à un profil ne comportant pas d'ondulation. Ainsi, en fonction de l'effet recherché, les ailettes pourront présenter un profil ondulé sur une ou deux faces, ce profil pouvant être étendu sur toute la longueur de l'ailette ou uniquement sur une portion d'ailette.

D'une manière générale, et pour l'ensemble des dispositifs et éléments de l'invention, l'utilisation d'ailettes de formes différentes permet d'obtenir des effets techniques différents. Ainsi, l'utilisation d'ailettes courbes ou ondulées permet d'obtenir une plus grande surface d'échange thermique, donc une meilleure efficacité du dispositif de chauffage. Toute autre forme d'ailette peut bien entendu être prévue.

Une telle réalisation ne peut être obtenue que par extrusion. En effet, seule l'extrusion permet d'obtenir avec une grande précision des formes complémentaires. Une telle précision permet ainsi un assemblage précis de la base et des ailettes et garantit une bonne continuité thermique entre ces pièces. On réalisera préférentiellement les éléments constitutifs de l'invention en aluminium ou en un de ses alliages. En effet, l'aluminium présente des caractéristiques thermiques particulièrement adaptées à la réalisation d'échangeurs de température et présente des caractéristiques mécaniques propices à l'extrusion.

Avantageusement, l'utilisation de matériau composite souple chauffant à faible niveau de puissance, collé en partie arrière de l'élément échangeur de température permet, grâce à la grande surface d'échange des ailettes, de limiter la température de la source de production de chaleur à un niveau très réduit. Ainsi, l'invention permet le chauffage d'une pièce par dissipation d'énergie rayonnante à un ΔT d'environ 95°C entre la source de production et la source d'utilisation de température. La réduction du ΔT augmente le rendement, réduit la consommation d'énergie et évite la convection.

Un autre avantage réside dans le fait que l'élément échangeur de température est réalisé en aluminium extrudé, ce qui permet l'utilisation de très faibles épaisseurs de métal, induisant par conduction un transfert immédiat de chaleur et éliminant toute inertie thermique. Ceci a pour conséquence une élimination quasi-totale du rayonnement infrarouge en partie arrière du radiateur.

Un autre avantage de l'invention réside dans le fait que l'utilisation avec un faible Delta T induit une dilatation négligeable et donc une absence des bruits et contraintes liés aux dilatations des différents éléments.

Un autre avantage encore réside dans le fait que l'élément échangeur de température et le diffuseur permettent un rayonnement aussi bien vertical qu'horizontal de 180°, ce qui apporte une répartition uniforme de la chaleur rayonnante.

Avantageusement, ce dispositif ne nécessite aucune pièce de fixation des différents éléments, ni aucun soudage, ce qui permet un montage simple, rapide et à faible coût. De plus, un tel dispositif présente l'avantage de pouvoir être commercialisé "en kit" et d'être ensuite monté par l'utilisateur. La commercialisation "en kit" présente l'avantage du faible encombrement du radiateur, ce qui réduit les coûts de stockage et de transport.

Avantageusement, ce dispositif constitue un radiateur hybride, permettant l'utilisation d'une source électrique, d'une source thermique (ou frigorifique) ou l'utilisation simultanée de plusieurs sources d'énergie.

On pourra également réaliser des modules de radiation ou des profilés pour plafond selon un mode spécifique de réalisation de l'invention de grande longueur, emboîtables et raccordables entre eux. On pourra également réaliser des séchoirs pour serviette, linge ou matériau textiles, comportant plusieurs modules de radiation solidarisés les uns aux autres et au moins un carénage prolongeant le diffuseur.

Un avantage de l'utilisation de l'aluminium extrudé réside dans les excellentes caractéristiques de conduction thermique de l'aluminium. Ces caractéristiques permettent l'utilisation d'éléments calorifères fonctionnant en basse température. On pourra ainsi utiliser comme élément calorifère des résistances autorégulantes (connues sous le nom de résistances PTC). Une telle association permet à l'invention de présenter un rendement performant.

Un autre avantage de l'invention est celui lié à son fonctionnement en basse température. En effet, plus la température d'un corps est élevée, plus la longueur d'onde du rayonnement infrarouge qu'il émet est faible. Ainsi, en abaissant la température d'émission d'un radiateur, on augmente la longueur d'onde émise et on diminuer la fréquence d'émission. Ainsi, les éléments calorifères à haute température (i.e. supérieure à 200°C) utilisés couramment émettent un rayonnement compris entre 0,2µm et 5µm, alors qu'un radiateur basse température permet d'obtenir un rayonnement compris entre 7µm et 15µm. Avantageusement, une émission d'infrarouge dont la longueur d'onde se situe entre 7µm et 15µm permet de chauffer les individus présents dans une pièce, sans chauffer l'air de la pièce. Les essais réalisés sur un module de radiation conforme à la figure 2, muni d'un tissu chauffant de 1500 W ont permis d'obtenir les valeurs suivantes :

| Elément échangeur 24 | | Face externe 50 du diffuseur | |
|---|---|---|---|
| Température (en °C) | rayonnement IR mesuré (en µm) | Température (en °C) | rayonnement IR mesuré (en µm) |
| 65 | 8,57 | 20 | 9,89 |
| 75 | 8,03 | 30 | 9,56 |
| 85 | 8,09 | 40 | 9,26 |
| 90 | 7,98 | 50 | 8,97 |
| 100 | 7,77 | 60 | 8,70 |
| 115 | 7,47 | 70 | 8,45 |

Ainsi, le module de radiation selon l'invention permet avantageusement d'émettre un rayonnement infrarouge compris entre 7,4µm et 10µm. Bien entendu, en adaptant les dimensions et caractéristiques du radiateur on pourra modifier les longueurs d'onde émises par le diffuseur. Ainsi, le module de radiation selon l'invention permet de produire un rayonnement infrarouge dont la longueur d'onde est comprise entre 7µm et 15µm.

## Revendications

1. Module de radiation comportant un support (11, 26), au moins un élément calorifère (13) et/ou un élément caloporteur (14) et un élément échangeur de température (20, 24) réalisé par extrusion et constitué d'une base (1) monobloc présentant une face interne (37b) comportant au moins un moyen (5, 6, 31) d'intégration de l'élément calorifère et/ou de l'élément caloporteur et une face externe (37a) comportant des ailettes de radiation (2, 32), module **caractérisé en ce qu'**il comporte un diffuseur (25) recevant un rayonnement infrarouge issu de l'élément échangeur de température, ledit diffuseur permettant d'émettre un rayonnement infrarouge de longueur d'onde inférieure à la longueur d'onde du rayonnement reçu.

2. Module de radiation selon la revendication 1, **caractérisé en ce que** le support (11, 26) se présente sous la forme d'un réceptacle et **en ce que** le diffuseur (25) constitue un couvercle de ce réceptacle, de manière à réaliser une enceinte fermée renfermant l'élément échangeur de température et l'élément calorifère et/ou l'élément caloporteur.

3. Module de radiation selon l'une des revendications 1 ou 2, **caractérisé en ce que** le diffuseur (25) présente une face interne (51) de réception orientée vers les ailettes de diffusion et une face externe (50) d'émission dont la surface est supérieure à la surface de la face de réception.

4. Module de radiation selon la revendication 3, **caractérisé en ce que** la face interne (51) de réception du diffuseur (25) est sensiblement lisse et la face externe (50) d'émission comporte des ondulations ou des excroissances afin de présenter une surface d'émission supérieure à la surface de la face de réception.

5. Module de radiation selon l'une des revendications 1 à 4, **caractérisé en ce que** les ailettes (32) sont sensiblement perpendiculaires à la base (1) et sensiblement parallèles entre elles, les ailettes et la base formant un élément monobloc.

6. Module de radiation selon la revendication 1 à 4, **caractérisé en ce que** les ailettes (2a à 2k) présentent au niveau d'un bord un profil complémentaire (4) à celui des moyens (3) de réception et sont solidarisées à la base (1) par insertion des profils complémentaires (4) dans les moyens (3) de réception des ailettes.

7. Module de radiation selon l'une des revendications 1 à 6, **caractérisé en ce que** les ailettes (2a à 2k, 32) ont un profil sensiblement en arc de cercle.

8. Module de radiation selon la revendication 7, **caractérisé en ce que** les ailettes (2a à 2e) sont disposées concaves sur une partie de la base (1) et (2g à 2k) disposées convexes sur l'autre partie de la base (1).

9. Module de radiation selon la revendication 8, **caractérisé en ce qu'**il comporte un élément central (2f) constitué de deux ailettes de courbure opposées solidaires l'une de l'autre.

10. Module de radiation selon l'une des revendications 1 à 9, **caractérisé en ce que** les ailettes (2, 32) présentent un profil ondulé afin d'augmenter la surface d'échange de chaleur.

11. Module de radiation selon l'une des revendications 1 à 10, **caractérisé en ce que** chaque base (1) comporte à ses deux extrémités latérales des moyens d'accrochage (7, 8, 9, 10) permettant la disposition côte à côte et la solidarisation entre elles de plusieurs bases.

12. Module de radiation selon l'une des revendications 1 à 11, **caractérisé en ce que** les moyens d'intégration d'un élément calorifère se présentent sous la forme de rails (6) entre lesquels peut être inséré un élément calorifère (13, 49).

13. Module de radiation selon la revendication 12, **caractérisé en ce qu'**il comporte un élément calorifère électrique se présentant sous la forme d'un tissu chauffant (13), une brique chauffante ou une résistance autorégulante.

14. Module de radiation selon la revendication 13, **caractérisé en ce que** l'élément calorifère est un matériau composite souple, sensiblement plat et apte à épouser la face interne (37b) de la base (1).

15. Module de radiation selon la revendication 14, **caractérisé en ce que** l'élément calorifère (13) est collé sur la face interne (37b) de la base (1) et est alimenté par une source électrique (15).

16. Module de radiation selon l'une des revendications 1 à 15, **caractérisé en ce que** le moyen caloporteur est un élément réfrigérant se présentant sous la forme d'au moins un tube (14) dans lequel circule un fluide caloporteur.

17. Module de radiation selon l'une revendication précédentes, **caractérisé en ce qu'**il est réalisé en aluminium extrudé.

18. Module de radiation selon l'une revendication précédentes, **caractérisé en ce que** le diffuseur (25) émet un rayonnement infrarouge dont la longueur d'onde est comprise entre 7 et 15 µm et plus particulièrement entre 7,4 et 10 µm.

19. Dispositif de régulation de la température d'une pièce ou d'un véhicule, **caractérisé en ce qu'**il comporte un capteur (16) de température, et au moins un module de radiation selon l'une des revendications 1 à 17, et **en ce qu'**il se présente sous une forme allongée et de faible largeur, afin d'être utilisé comme plinthe, comme profilé d'échange de température pour plafond, comme montant d'ouvrant ou comme colonne de radiation à 360°.
